# FASCICULE DE BREVET EUROPEEN

(11) **EP 0 567 712 B1**
(45) Date de publication et mention de la délivrance du brevet: **03.09.1997**
(21) Numéro de dépôt: 92810312.6
(22) Date de dépôt: 29.04.1992
(51) Int. Cl.: G07F 7/10, G06K 17/00

(54) **Appareil de poche permettant le "postmarquage" des chèques bancaires et le contrôle de la légitimité du signataire au moment de la signature**
Tragbare Vorrichtung zum Markieren von Schecks nach der Prüfung und zum Prüfen der Rechtmässigkeit des Unterschreibers im Augenblick des Unterschreibens
Portable device capable of post-marking bank cheques and verifying the legitimary of the signer at the moment of signing

(43) Date de publication de la demande: 03.11.1993
(73) Titulaire: KRATER ANSTALT, FL- 9497 Triesenberg (LI)
(72) Inventeur:

(56) Documents cités:
- WO-A-84/02212
- FR-A- 2 558 622
- FR-A- 2 577 704
- FR-A- 2 644 265
- FR-A- 2 650 094
- GB-A- 2 212 641
- US-A- 4 053 735
- US-A- 4 623 965
- US-A- 4 672 377

## Description

Cette invention traite d'un appareil autonome de petites dimensions qui permet, d'une part, le "post-marquage" (inscription du montant en caractères reconnaissables par un sytème de traitement automatique) d'un chèque bancaire de format standard, d'autre part, le contrôle de la légitimité de la personne qui rédige ledit chèque, en tant que personne autorisée à le faire.

### Antécédents

L'objectif principal de cette invention est de réduire les coûts de traitement d'un chèque, tout en assurant le récipiendaire dudit chèque que ce demier n'a pas été volé.

En effet, de façon à pouvoir traiter automatiquement et électroniquement les chèques, les organismes bancaires ont recours à un procédé appelé "post-marquage", qui consiste à imprimer sur le chèque même, en caractères reconnaissables par un sytème de traitement automatique, le montant du chèque. Cette opération est longue, fastidieuse et onéreuse, car aujourd'hui elle est faite par des opérateurs humains; elle n'est, de plus, pas exempte de risques d'erreurs, dues à une faute de frappe, une inattention ou une mauvaise interprétation de l'écriture manuscripte apparaissant sur le chèque. Les coûts et lenteurs, induits par le post-marquage, ont conduit les organismes bancaires à promouvoir de nouveaux moyens de paiement tels que cartes de crédit, et cartes à puce électronique.

D'autre part, les chéquiers, cartes de crédit ou à puce électronique sont dérobés à leurs propriétaires et abusivement utilisés, induisant des pertes énormes pour les légitimes propriétaires ou les organismes bancaires.

L'appareil, décrit par le brevet WO-A-8 402 212, présente certaines des caractéristiques de celui qui est l'objet de la présente invention; il permet en effet la lecture du numéro de compte inscrit sur un chèque, l'introduction d'un code secret par le légitime tireur du chèque ainsi que l'impression du montant désiré sur le chèque. Toutefois, il s'en distingue par les aspects suivants: il n'est ni autonome ni portable puisqu'il doit être relié, au moment où le chèque est libellé, par modem à un centre de vérification bancaire exteme, ce qui limite son utilisation à des personnes ou entreprises disposant d'une liaison téléphonique avec ledit centre, il ne peut donc être utilisé en tout lieu et tout moment; il n'effectue pas lui-même la vérification des code secret et numéro de compte lu sur le chèque, cette vérification devant être assurée par le centre de vérification bancaire exteme; il ne procède pas au post-marquage du chèque, ce qui ne présente aucune économie dans le traitement du chèque par les banques.

### Sommaire de l'invention

Cette invention traite d'un appareil autonome de faibles dimensions qui permet de lire sur un chèque le numéro de compte en banque inscrit, en caractères reconnaissables par un système de traitement automatique, de controler s'il correspond bien au code introduit par l'opérateur au moyen d'un clavier dont est muni l'appareil, objet de la présente invention, et, si c'est le cas, d'imprimer, en caractères reconnaissables par un système de traitement automatique, le montant du chèque que l'opérateur fournit à l'appareil au moyen du clavier dont il est équipé. Le chèque ainsi imprimé pourra être traité par les organismes bancaires automatiquement, sans délais et au moindre coût. Le récipiendaire du chèque sera assuré que la personne qui l'a libellé est légitimement habilitée à le faire, car en possession du code, correspondant au numéro de compte en banque. Le légitime possesseur dudit compte saura qu'au cas où ses chèques et appareil, objet de la présente invention, lui seraient volés, ses chèques ne pourraient pas être abusivement utilisés.

L'invention a pour objet un appareil autonome tel que défini dans la revendication indépendante.

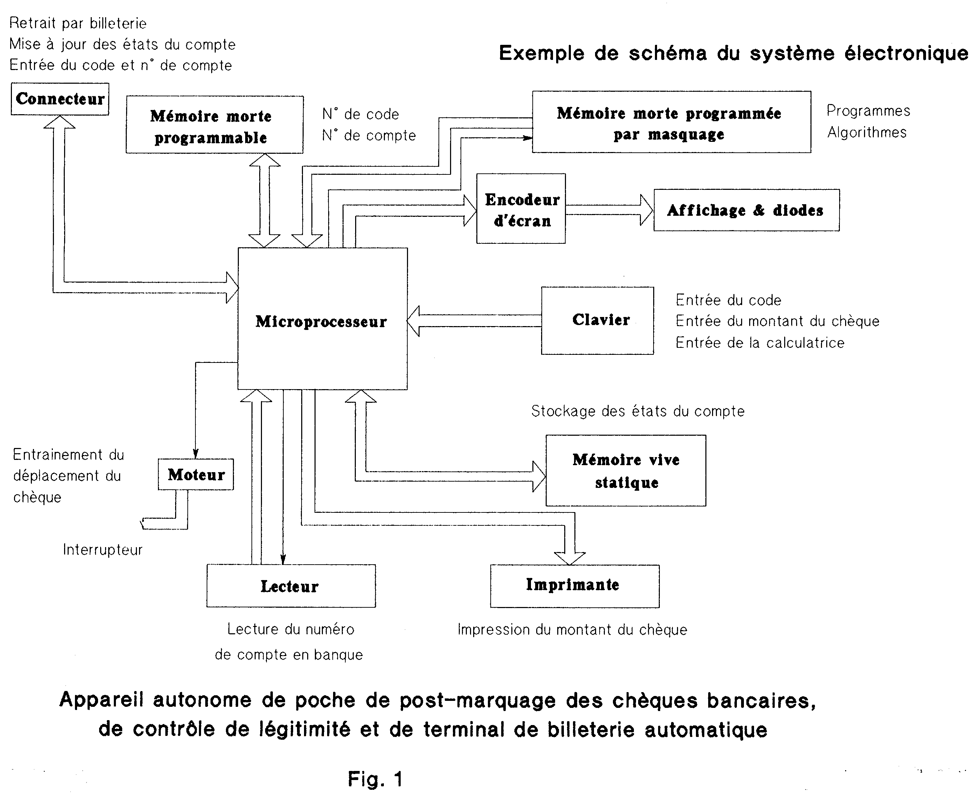

Des modes de réalisation particuliers de l'invention sont indiqués dans les revendications dépendantes. Le schéma présenté par la Fig.1 ci-jointe est un exemple de réalisation de la partie électronique de l'appareil, objet de la présente invention.

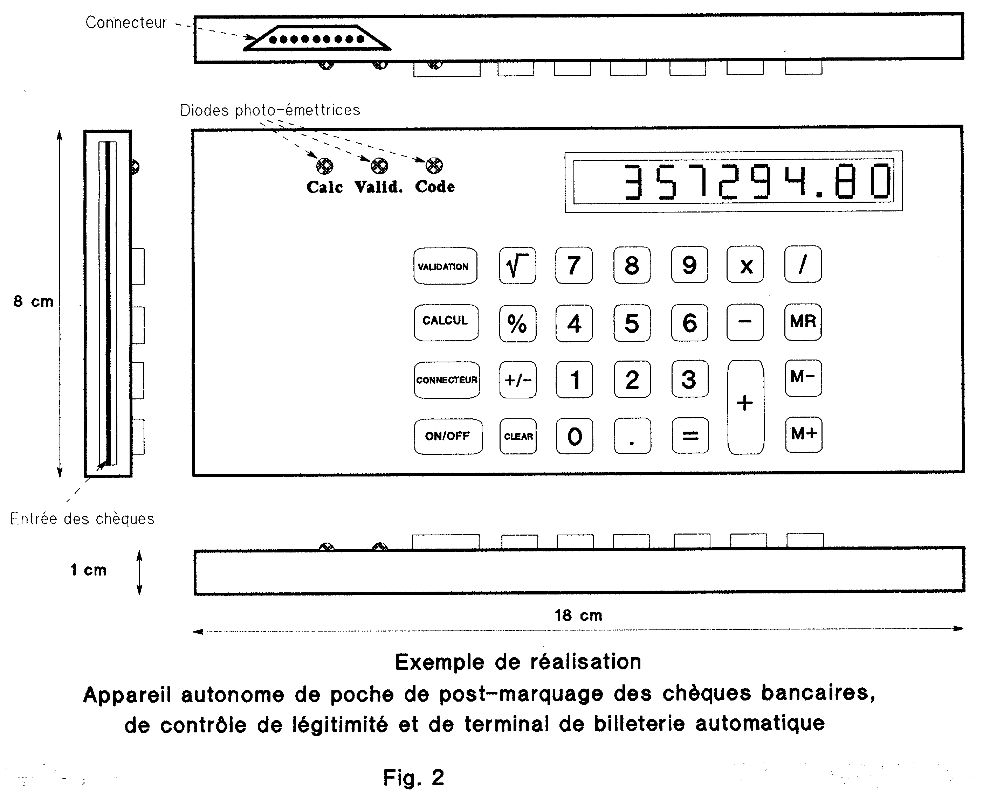

Le schéma, présenté par la Fig. 2 ci-jointe, donne un exemple de l'aspect extérieur de l'appareil, objet de la présente invention.

### Description du fonctionnement

### 1- Post-marquage et contrôle de légitimité

Quand le légitime possesseur des chèques et de l'appareil, objet de la présente invention, désire payer au moyen de l'un de ses chèques, il le libelle à la main. Puis il introduit le chèque manuscript dans l'appareil par la fente prévue à cet effet. A ce moment, le chèque déclenche à l'aide de l'interrupteur le moteur qui le fait défilé devant le lecteur. La plage, portant en caractères reconnaissables par un système automatique le numéro du compte bancaire passe devant ledit lecteur; le numéro est lu par ce dernier et envoyé au processeur. Une fois la lecture terminée, le processeur compare le numéro du compte bancaire ainsi lu à celui enregistré dans la mémoire morte. Si les numéros concordent, le processeur demande, par affichage, à l'opérateur d'introduire au clavier le code secret. Le code ainsi introduit est comparé avec celui enregistré dans la mémoire morte. Si ces numéros concordent également, le processeur demande, par affichage, que le montant du chèque soit introduit au clavier par l'opérateur et que ce demier le valide. Le processeur prépare alors les instructions et données à foumir à l'imprimante, incorporé dans l'appareil, objet de la présente invention. L'imprimante imprime sur ledit chèque, en caractères reconnaissables par un système automatique, le montant du chèque sur la plage prévue à cet effet. Une fois l'impression terminée, le processeur commande au moteur de procéder à la sortie du chèque, mettant ainsi fin à l'opération de post-marquage et de contrôle de légitimité.

Au cas où le numéro de compte, lu par l'appareil, objet de la présente invention, ou le code, introduit au clavier par l'opérateur, ne correspondent pas à ceux enregistrés en mémoire, le processeur commande au moteur de faire ressortir le chèque sans qu'il y soit imprimé la moindre chose, et annule l'opération.

Au cas où la mémoire morte permettant le stockage du numéro de compte en banque et du code secret est une mémoire morte électronique, soit électriquement effaçable et reprogrammable (e.g., EEPROM), soit effaçable par irradiation aux ondes électromagnétiques et reprogrammable électriquement (e.g., EPROM), il convient de prévoir un algorithme de sécurité qui sera stocké dans la mémoire morte programmée par masquage lors de sa fabrication et qui permettra au seul organisme bancaire, émetteur de l'appareil, objet de la présente invention, de modifier le contenu de cette mémoire morte électronique, soit électriquement effaçable et reprogrammable, soit effaçable par irradiation aux ondes électromagnétques et reprogrammable électriquement.

### 2- Terminal de billeterie automatique

Par son connecteur, l'appareil, objet de la présente invention, peut être connecté à une billeterie automatique ou tout autre système équivalent dûment équipé d'un connecteur correspondant. Le légitime possesseur du compte en banque et de l'appareil, objet de la présente invention, peut alors, après s'être correctement identifié par son code secret, interroger à l'aide dudit appareil l'ordinateur central de la banque, opérer un retrait en espèces, connaitre la position de son compte, mettre à jour dans la mémoire vive statique dudit appareil le montant disponible sur son compte.

### 3- Calculatrice

Avant de procéder à la rédaction et émission d'un chèque, le possesseur de l'appareil, objet de la présente invention, peut vouloir effectuer un certain nombre d'opérations arithmétiques. L'appareil, objet de la présente invention, contient un programme dans sa mémoire morte lui permettant d'exécuter de telles opérations à l'aide du clavier, de l'affichage et de la mémoire du processeur.

## Revendications

1. Appareil autonome de poche comprenant:
- une mémoire morte électronique programmable une seule fois permettant le stockage d'un numéro de compte en banque et d'un code secret,
- un système de lecture du numéro de compte en banque inscrit en caractères reconnaissables par un système automatique sur un chèque de format standard introduit dans l'appareil par l'opérateur,
- un clavier et un affichage permettant à l'opérateur d'introduire un code secret et le montant du chèque,
- un processeur électronique à semiconducteur agencé pour contrôler que le numéro de compte lu sur le chèque et le code secret introduit au clavier correspondent bien à ceux conservés dans la mémoire morte, le processeur opérant sur un nombre quelconque de bits,
- un système d'impression qui permet l'inscription sur le chèque, en caractères reconnaissables par un système automatique, du montant dudit chèque,
- un moteur qui fait défiler le chèque devant le système de lecture lors de son introduction dans ledit appareil et le fait ressortir une fois l'impression terminée ou l'opération annulée par l'opérateur,
- une mémoire morte électronique programmée par masquage lors de sa fabrication contenant les programmes et algorithmes utilisés par le processeur pour l'exécution de ses diverses fonctions,
- une série de diodes photo-émettrices pour indiquer à l'opérateur dans quel mode se trouve ledit appareil ou quelle action est attendue de lui.
- une mémoire vive statique permettant le stockage de toute information fournie par le processeur, le processeur étant agencé pour effectuer les opérations arithmétiques de base permettant ainsi à l'appareil de faire office de calculatrice de poche, pour gérer les mémoires mortes et la mémoire vive statique, les entrées faites au clavier et celles faites par le système de lecture, ainsi que les sorties vers l'affichage, les diodes photo-émettrices, le système d'impression et la mémoire vive statique
- un interrupteur mécanique de contact qui déclenche le moteur lors de l'introduction d'un chèque.
- une alimentation électrique.

2. Appareil selon la revendication précédente, dans lequel l'affichage est soit un affichage à cristaux liquides, soit un affichage à diodes photoémettrices, soit un affichage par électroluminescence, soit un affichage par électrophorèse, soit un affichage par transitors photo-émetteurs.

3. Appareil selon l'une des revendications 1 à 2, où on remplace les diodes photo-émettrices de la série de diodes photo-émittrices par des transistors photo-émetteurs.

4. Appareil selon l'une des revendications 1 à 3, où on remplace l'interrupteur mécanique de contact du moteur par un interrupteur photoélectrique.

5. Appareil selon l'une des revendications 1 à 4, dans lequel le système de lecture du numéro de compte en banque est soit un système de lecture opto-électronique, soit un système de lecture mécanique, soit un système de lecture magnétique.

6. Appareil selon l'une des revendications 1 à 5, où on remplace la mémoire vive statique par une mémoire vive dynamique pour le stockage de tout information foumie par le processeur.

7. Appareil selon l'une des revendications 1 à 6, où on remplace la mémoire morte électronique programmable une seule fois pour le stockage du numéro de compte en banque et du code secret par une mémoire morte électronique électriquement effaçable et reprogrammable.

8. Appareil selon l'une des revendications 1 à 6, où on remplace la mémoire morte électronique programmable une seule fois pour le stockage du numéro de compte en banque et du code secret par une mémoire morte électronique effaçable par irradiation aux ondes électromagnétiques et reprogrammable électriquement.

9. Appareil selon l'une des revendications 1 à 8, dans lequel le système d'impression est soit une imprimante à impact, soit une imprimante à jet d'encre, soit une imprimante à transfert thermique, soit une imprimante utilisant le procédé de Xérographie à lumière cohérente ou incohérente, soit une imprimante utilisant le procédé de Xérographie à faisceau d'électrons, soit un système inscrivant magnétiquement le montant du chèque sur une piste en matériau magnétisable dont serait muni le chèque bancaire, soit un système traçant, à l'aide d'un ou plusieurs styles ou plumes encrés, les éléments constitutifs des caractères reconnaissables par un système de traitement automatique, qui composeront le montant du chèque à inscrire sur le chèque introduit par l'opérateur dans ledit appareil.

10. Appareil selon l'une des revendications 1 à 9, dans lequel l'alimentation électrique est soit une alimentation électrique par piles, soit une alimentation électrique par batteries, soit une alimentation électrique par cellules photovoltaïques.

11. Appareil selon l'une des revendications 1 à 10, où la mémoire morte électronique programmée par masquage lors de sa fabrication contenant les programmes et algorithmes utilisés par le processeur pour l'exécution de ses diverses fonctions est incorporée dans le processeur électronique à semiconducteur.

12. Appareil selon l'une quelconque des revendications 1 à 11 comprenant un connecteur qui permet de relier ledit appareil à une billeterie automatique ou à tout équipement de ce genre en vue de procéder à un retrait en espèces et une mise à jour des états bancaires et qui, lors de la remise dudit appareil au possesseur du chèquier et du compte en banque par l'organisme bancaire, sert à introduire dans la mémoire morte programmable, le numéro de compte et le code secret, les entrées et sorties faites par ce connecteur étant gérées par le processeur électronique à semiconducteur.

## Patentansprüche

1. Autonomes Taschengerät, das folgendes umfasst:
- Einen ein einziges Mal programmierbaren elektronischen Festspeicher zur Speicherung einer Bankkontonummer und eines Geheimcodes
- Ein System zum Lesen der Bankkontonummer, die in mittels eines automatischen Systems erkennbaren Zeichen auf den vom Bediener in das Gerät eingeführten Standardformat-Scheck geschrieben ist
- Eine Tastatur und eine Anzeige zur Eingabe eines Geheimcodes und des Scheckbetrags durch den Bediener
- Einen elektronischen Halbleiterprozessor, konzipiert, um zu kontrollieren, dass die auf dem Scheck gelesene Kontonummer und der über die Tastatur eingegebene Geheimcode mit den im Festspeicher enthaltenen übereinstimmen, wobei der Prozessor mit beliebiger Bitzahl operiert
- Ein Drucksystem, das erlaubt, auf den Scheck in mittels eines automatischen Systems erkennbaren Zeichen den Betrag des besagten Schecks zu schreiben
- Einen Motor, der den Scheck bei seiner Einführung in das besagte Gerät vor dem Lesesystem passieren lässt und ihn nach dem Drucken oder nach Vorgangsabbruch durch den Bediener wieder ausgibt
- Einen während seiner Herstellung maskenprogrammierten elektronischen Festspeicher, der die vom Prozessor zur Ausführung seiner diversen Funktionen benutzten Programme und Algorithmen enthält
- Eine Reihe photoemissiver Dioden, um dem Bediener anzuzeigen, in welchem Modus sich das besagte Gerät befindet oder welche Handlung von ihm erwartet wird
- Einen statischen RAM zur Speicherung jeder vom Prozessor gelieferten Information, wobei der Prozessor für die Ausführung der arithmetischen Grundoperationen konzipiert ist und dadurch bewirkt, dass das Gerät als Taschenrechner dienen kann, um die Festspeicher und den statischen RAM, die über die Tastatur und die durch das Lesesystem erfolgten Eingaben sowie die Ausgaben zur Anzeige, zu den photoemissiven Dioden, zum Drucksystem und zum statischen RAM zu verwalten
- Einen mechanischen Kontaktschalter, der den Motor bei Einführung eines Schecks auslöst
- Eine elektrische Speisung.

2. Gerät gemäss der vorstehenden Anforderung, bei dem die Anzeige entweder mittels Flüssigkristallen oder mittels photoemissiver Dioden oder mittels Elektrolumineszenz oder mittels Elektrophorese oder mittels photoemissiver Transistoren erfolgt.

3. Gerät gemäss einer der Anforderungen 1 bis 2, bei dem man die photoemissiven Dioden der photoemissiven Diodenreihe durch photoemissive Transistoren ersetzt.

4. Gerät gemäss einer der Anforderungen 1 bis 3, bei dem man den mechanischen Kontaktschalter des Motors durch einen photoelektrischen Schalter ersetzt.

5. Gerät gemäss einer der Anforderungen 1 bis 4, bei dem das Bankkontonummer-Lesesystem entweder ein optoelektronisches oder ein mechanisches oder ein magnetisches Lesesystem ist.

6. Gerät gemäss einer der Anforderungen 1 bis 5, bei dem man den statischen RAM durch einen dynamischen RAM zur Speicherung jeder vom Prozessor gelieferten Information ersetzt.

7. Gerät gemäss einer der Anforderungen 1 bis 6, bei dem man den ein einziges Mal programmierbaren elektronischen Festspeicher zur Speicherung der Bankkontonummer und des Geheimcodes durch einen elektrisch löschbaren und wieder programmierbaren elektronischen Festspeicher ersetzt.

8. Gerät gemäss einer der Anforderungen 1 bis 6, bei dem man den ein einziges Mal programmierbaren elektronischen Festspeicher zur Speicherung der Bankkontonummer und des Geheimcodes durch einen durch Bestrahlung mit elektromagnetischen Wellen löschbaren und elektrisch wieder programmierbaren elektronischen Festspeicher ersetzt.

9. Gerät gemäss einer der Anforderungen 1 bis 8, bei dem das Drucksystem entweder ein elektromechanischer Schnelldrucker oder ein Tintenstrahldrucker oder ein Thermodrucker oder ein mit kohärentem oder inkohärentem Licht arbeitender xerographischer Drucker oder ein mit Elektronenbündeln arbeitender xerographischer Drucker oder ein den Scheckbetrag magnetisch auf eine Spur im Bankscheck vorhandenen magnetisierbaren Materials schreibendes System oder ein System ist, das mittels einer oder mehrerer Tintenstifte oder - federn die Bestandteile der durch ein automatisches Verarbeitungssystem erkennbaren Zeichen schreibt, die den Scheckbetrag bilden, der auf den vom Bediener in das besagte Gerät eingeführten Scheck zu schreiben ist.

10. Gerät gemäss einer der Anforderungen 1 bis 9, bei dem die elektrische Speisung entweder eine elektrische Speisung mittels Zellen oder eine elektrische Speisung mittels Batterien oder eine elektrische Speisung mittels Photoelementen ist.

11. Gerät gemäss einer der Anforderungen 1 bis 10, bei dem der bei seiner Herstellung maskenprogrammierte elektronische Festspeicher, der die vom Prozessor für die Ausführung seiner diversen Funktionen benutzten Programme und Algorithmen enthält, in den elektronischen Halbleiterprozessor integriert ist.

12. Gerät gemäss einer beliebigen der Anforderungen 1 bis 11, das einen Verbinder umfasst, der den Anschluss des besagten Geräts an einen Geldausgabeautomaten oder an jedwede Vorrichtung dieser Art im Hinblick auf die Durchführung einer Barentnahme und einer Aktualisierung der Kontostände erlaubt und der, bei der Aushändigung des besagten Geräts an den Besitzer des Scheckhefts und des Bankkontos durch das Bankinstitut dazu dient, die Kontonummer und den Geheimcode in den programmierbaren Festspeicher einzugeben, wobei die durch diesen Verbinder erfolgten Ein- und Ausgaben durch den elektronischen Halbleiterprozessor verwaltet werden.

## Claims

1. Hand-held autonomous device consisting of:
- an electronic one-time programmable read-only memory allowing the storage of an bank account number and of a secret code,
- a reading system of the bank account number, written in characters recognisable by an automatic system, on a cheque of standard format introduced in the device by the operator,
- a keyboard and a display enabling the operator to introduce a secret code and the amount of the cheque,
- a semiconductor electronic processor set up to control that the account number read on the cheque and the secret code introduced by the operator correspond to those stored on the read-only memory, the processor operating on any number of bits,
- a printing system which allows the inscription on the cheque, in characters recognisable by an automatic system, of the amount of the said cheque,
- a motor which moves the cheque through the reading system when it is introduced in the said device and moves it out of the said device when printing is finished or when the operator cancels the operation,
- an electronic read-only memory programmed by mask when it is produced containing the programmes and algorithms used by the processor to execute its various functions,
- a series of light-emitting diodes to indicate to the operator in which mode is the said device or which action is expected of the operator,
- a static random access memory allowing the storage of all information provided by the processor, the processor being set up to execute basic arithmetical operations thus enabling the device to operate like a hand-held calculator, to manage the read-only memories and the static random-access memory, the inputs made with the keyboard and those made by the reading system, as well as the outputs to the display, the light-emitting diodes, the printing system and the static random-access memory,
- a mechanical contact switch which triggers the motor on when a cheque is introduced,
- a electrical power supply.

2. Device as per previous claim in which the display is either a liquid-crystal display, or a light-emitting diode display or an electro-luminescent display or an electrophorese display or a light-emitting transistor display.

3. Device as per one of the claims 1 to 2, where the light-emitting diodes of the series of light-emitting diodes is replaced by light-emitting transistors.

4. Device as per one of the claims 1 to 3, where the mechanical contact switch of the motor is replaced by a photoelectric switch.

5. Device as per one of the claims 1 to 4, where the system reading the bank account number is either an opto-electronic reading system, or a mechanical reading system, or magnetic reading system.

6. Device as per one of the claims 1 to 5, where the static random-access memory is replaced by dynamic random-access memory for the storage of all information provided by the processor.

7. Device as per one of the claims 1 to 6, where the one-time programmable electronic read-only memory for the storage of the bank account number and the secret code is replaced by electrically erasable programmable read-only memory.

8. Device as per one of the claims 1 to 7, where the one-time programmable electronic read-only memory for the storage of the bank account number and the secret code is replaced by an electronic programmable read-only memory that can be erased by electromagnetic waves.

9. Device as per one of the claims 1 to 8, where the printing system is either an impact printer, or an inkjet printer, or a thermal transfer printer, or a printer using the coherent or incoherent light Xerographic process, or a printer using the electron-beam Xerographic process or a system magnetically writing the amount of the cheque on a strip of magnetic material incorporated in the cheque, or a system plotting, thanks to one or many inked pens, the building blocks of the characters recognisable by an automatic processing system, which will compose the amount of the cheque to be written on the cheque introduced by the operator in the said device.

10. Device as per one of the claims 1 to 9, where the electrical power supply is either a non-rechargeable battery power supply, or a rechargeable battery power supply, or photo-voltaic power supply.

11. Device as per one of the claims 1 to 10, where the electronic read-only memory programmed by mask when it is produced containing the programmes and algorithms used by the processor to execute its various functions is incorporated into the semiconductor electronic processor.

12. Device as per anyone of the claims 1 to 11 including a connector which allows to link the said device to an automatic teller machine or any such equipment to enable the withdrawal of banknotes and an update of the bank statements and which, at the time the said device is given by the bank to the owner of the cheque book and of the bank account, is used to introduce into the programmable read-only memory the account number and the secret code, the inputs and outputs done thtrough this connector being managed by the semiconductor electronic processor.
